# EUROPÄISCHE PATENTSCHRIFT

(11) **EP 1 473 444 B1**
(45) Veröffentlichungstag und Bekanntmachung des Hinweises auf die Patenterteilung: **08.03.2006**
(21) Anmeldenummer: 04010125.5
(22) Anmeldetag: 28.04.2004
(51) Int. Cl.: F01N 1/08, B60H 1/00, F01N 7/20

(54) **Schalldämpfer für ein Fahrzeugtemperiergerät**
Silencer for vehicle heating/cooling device
Silencieux pour système de chauffage/climatisation de véhicules

(30) Priorität: 29.04.2003 DE 10319318
(43) Veröffentlichungstag der Anmeldung: 03.11.2004
(73) Patentinhaber: J. Eberspächer GmbH & Co. KG, 73730 Esslingen (DE)
(72) Erfinder: Collmer, Andreas, 73760 Ostfildern (DE)
(74) Vertreter: Ruttensperger, Bernhard

(56) Entgegenhaltungen:
- DE-A- 19 932 714
- FR-A- 2 712 851
- US-A- 2 020 903
- US-A- 2 912 063
- US-B1- 6 318 796

## Beschreibung

Die vorliegende Erfindung betrifft einen Schalldämpfer für ein Fahrzeugheizgerät gemäß dem Oberbegriff des Anspruchs 1.

Bei Fahrzeugheizgeräten, wie sie insbesondere in Wohnmobilen oder Wohnwagen eingesetzt werden, besteht grundsätzlich ein Problem darin, dass vor allem in einem Zustand, in welchem das Fahrzeug still steht und somit keine Fahrgeräusche vorhanden sind, die durch ein Heizgerät erzeugten Geräusche deutlich vernehmbar sind. Dabei sind insbesondere Gebläse kritisch, beispielsweise Gebläse, mit welchen die Verbrennungsluft zu einem Brennerbereich des Heizgeräts gefördert werden und somit auch die Verbrennungsabgase aus diesem Brennerbereich ausgestoßen werden, bzw. Gebläse, über welche die zur Erwärmung in einem Innenraum einzuspeisende Luft zu einer Wärmetauscheranordnung geleitet wird. Entsprechendes gilt selbstverständlich auch bei Klimatisierungssystemen, bei welchen nicht Wärme auf die in den Innenraum einzuspeisende Luft übertragen wird, sondern dieser Luft Wärme entzogen wird.

Hinsichtlich der ungewünschten Abgabe von Geräuschen, insbesondere Strömungs- bzw. Gebläsegeräuschen, sind insbesondere diejenigen Bereiche kritisch, in welchen jeweilige Strömungsführungsleitungen, also im Allgemeinen Luftleitungen, zum Aufnehmen von Luft oder zum Abgeben von Luft offen sind. Entsprechendes gilt selbstverständlich bei der Abgabe von Verbrennungsabgasen o.dgl., so dass hier darauf hingewiesen wird, dass im Sinne der vorliegenden Erfindung dann, wenn von Luft bzw. Luftströmung und den dabei erzeugten geräuschinduzierten Problemen die Rede ist, dies selbstverständlich auch jedwedes andere strömungsfähige bzw. gasanlige Medinen mit einschließt, bei dessen Transport entsprechende Probleme auftreten.

Die US-A-2 912 063 offenbart einen an einem Leitungsende anzubringenden Schalldämpfer gemäß dem Oberbegriff des Anspruchs 1. Dieser bekannte Schalldämpfer bildet in einem im Wesentlichen zylindrischen Gehäuse einen spiralartigen Strömungsweg, entlang welchem das aus der Leitung ausströmende Medium geführt wird, bevor es ins Freie austritt.

Es ist die Aufgabe der vorliegenden Erfindung, einen Schalldämpfer für ein Fahrzeugtemperiergerät vorzusehen, mit welchem in einfacher Art und Weise eine effiziente Geräuschdämpfung erlangt werden kann.

Erfindungsgemäß wird diese Aufgabe gelöst durch einen Schalldämpfer für ein Fahrzeugtemperiergerät, wie er im Anspruch 1 definiert ist.

Dieser erfindungsgemäße Schalldämpfer, welcher also im Wesentlichen kappenartig ausgebildet ist und auf das Ende einer Leitung aufgesetzt werden kann, sorgt dafür, dass durch eine zwangsweise Strömungsumlenkung unter Ausnutzung eines so genannten Labyrinth-Effektes und dabei auch auftretenden Schallreflexionen die Geräuschemission am Öffnungsbereich einer Leitung gemindert werden kann.

Beispielsweise kann vorgesehen sein, dass das Schalldämpfergehäuse im Wesentlichen topfartig ausgebildet ist und den Anbringungsabschnitt umgibt.

Bei einer auch aus Stabilitätsgründen besonders bevorzugten Ausgestaltungsform kann weiter vorgesehen sein, dass das Schalldämpfergehäuse den Strömungsweg zusammen mit dem Anbringungsabschnitt begrenzt.

Um hier den vorangehend angesprochenen Labyrinth-Effekt bei vergleichsweise einfachem konstruktiven Aufbau effizient nutzen zu können, wird vorgeschlagen, dass zwischen dem Anbringungsabschnitt und dem Schalldämpfergehäuse ein wendelartiger Strömungsweg begrenzt ist, der zur Leitung im Bereich eines Gehäusebodens des Schalldämpfergehäuses offen ist und zur Umgebung in einem vom Gehäuseboden entfernten Endbereich des Schalldämpfergehäuses offen ist. Hierzu ist es beispielsweise möglich, dass zwischen dem Schalldämpfergehäuse und dem Anbringungsabschnitt eine sich wendelartig erstreckende Strömungsführungswandung vorgesehen ist.

Bei einer alternativen Ausgestaltungsform kann vorgesehen sein, dass zwischen dem Schalldämpfergehäuse und dem Anbringungsabschnitt ein im Wesentlichen ringartiger Strömungsweg gebildet ist, welcher zur Leitung im Bereich eines Gehäusebodens des Schalldämpfergehäuses offen ist und zur Umgebung in einem von dem Gehäuseboden entfernten Endbereich des Schalldämpfergehäuses offen ist. Um dabei einerseits die Verbindung zwischen dem Anbringungsabschnitt und dem Schalldämpfergehäuse realisieren zu können, andererseits aber den geeigneten Durchtritt sicherzustellen, wird vorgeschlagen, dass in dem Anbringungsabschnitt wenigstens eine Durchtrittsöffnung vorgesehen ist, über welche der Strömungsweg zur Leitung offen ist.

Um dafür zu sorgen, dass die im Bereich des erfindungsgemäßen Schalldämpfers eingeführte Zwangsumlenkung z. B. eines Luftstroms nicht durch Verwirbelungen o.dgl. selbst Geräusche induziert, ist bei dem erfindungsgemäßen Schalldämpfer vorgesehen, dass im Bereich eines Gehäusebodens des Schalldämpfergehäuses ein in Richtung auf den Anbringungsabschnitt zu sich erstreckender Strömungsführungsvorsprung vorgesehen ist. Hierbei kann vorzugsweise vorgesehen sein, dass der Strömungsführungsvorsprung in den Anbringungsabschnitt eingreift.

Die vorliegende Erfindung wird nachfolgend mit Bezug auf die beiliegenden Zeichnungen beschrieben. Es zeigt:
- Fig. 1: einen erfindungsgemäßen Schalldämpfer an einer Luftleitung;
- Fig. 2: die in Fig. 1 gezeigte Anordnung in teilweise aufgeschnittener Darstellung;
- Fig. 3: eine Längsschnittansicht der in Fig. 1 dargestellten Anordnung;
- Fig. 4: eine der Fig. 1 entsprechende Ansicht eines alternativ ausgestalteten Schalldämpfers;
- Fig. 5: die in Fig. 4 dargestellte Anordnung in teilweise aufgeschnittener Ansicht;
- Fig. 6: eine Längsschnittansicht der in Fig. 4 gezeigten Anordnung.

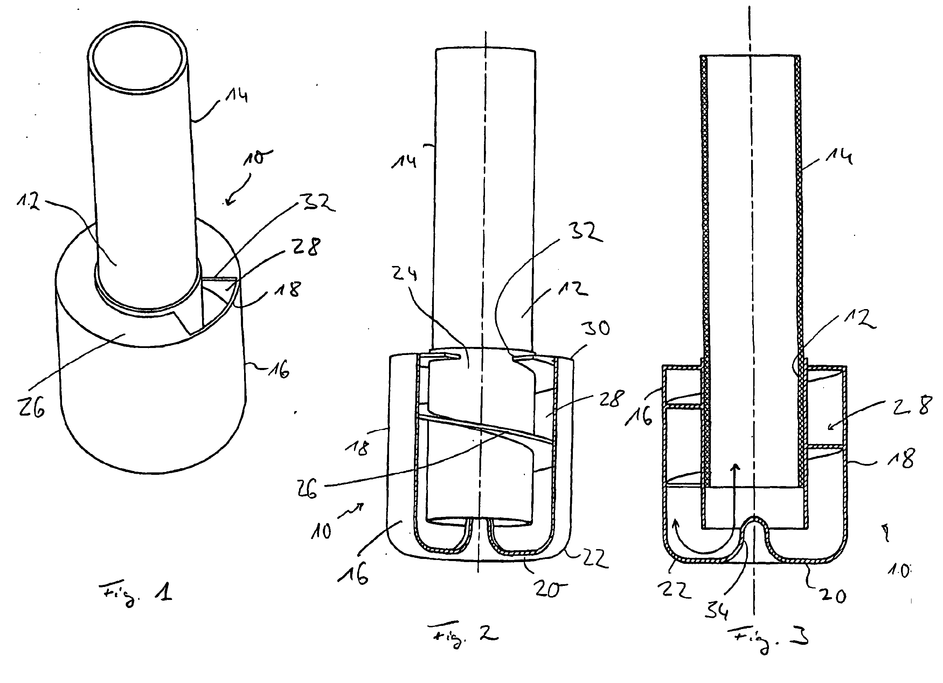

In den Fig. 1 - 3 ist eine erste Ausgestaltungsform eines erfindungsgemäßen Luftschalldämpfers 10 gezeigt. Dieser Luftschalldämpfer 10 ist hier an einem Endbereich 12 einer beispielsweise schlauchartig ausgebildeten Luftleitung 14 angebracht, um dafür zu sorgen, dass beim Eintritt bzw. beim Austritt von Luft die in der Luft transportierten Geräusche, insbesondere Gebläsegeräusche, gedämpft werden und somit im Wesentlichen nicht nach außen gelangen.

Bei der in den Fig. 1 - 3 dargestellten Ausgestaltungsvariante umfasst der Schalldämpfer 10 ein im Wesentlichen topfartig ausgebildetes Schalldämpfergehäuse 16. Dieses wiederum umfasst eine im Wesentlichen zylindrische Umfangswandung 18, die in einen damit integral ausgestalteten Bodenbereich 20 in einem vorzugsweise gekrümmt ausgestalteten Übergangsbereich 22 übergeht. Dieses Schalldämpfergehäuse 16 umgibt einen hülsenartig ausgestalteten, im Wesentlichen zylindrischen Anbringungsabschnitt 24 bezüglich einer Längsmittenachse desselben bzw. auch einer Längsmittenachse der Umfangswandung 18 im Wesentlichen konzentrisch. Über eine nachfolgend noch beschriebene Luftströmungsführungswandung 26 ist der Anbringungsabschnitt 24 mit dem Schalldämpfergehäuse 16 bzw. der Umfangswandung 18 desselben verbunden. Es ist beispielsweise möglich, diese Luftströmungsführungswandung 26 mit dem Anbringungsabschnitt 24 integral auszugestalten oder an einer Außenumfangsseite desselben anzubringen und nachfolgend das Schalldämpfergehäuse 16 auf diese Anordnung aufzuschieben.

Diese Luftströmungsführungswandung 26 ist im Wesentlichen wendelartig ausgestaltet, so dass unter Mitwirkung dieser Luftströmungsführungswandung 26, des Anbringungsabschnitts 24 und des Schalldämpfergehäuses 16 ein entsprechend wendelartig ausgestalteter Luftströmungsweg 28 in dem Schalldämpfer 10 gebildet ist. In einem vom Bodenbereich 20 entfernten Endbereich 30 der Umfangswandung 18 bzw. des Schalldämpfergehäuses 16 ist dieser Luftströmungsweg 28 im Bereich einer insbesondere in der Luftströmungsführungswandung 26 gebildeten Aussparung oder Öffnung 32 offen. Nahe dem Bodenbereich 20 des Gehäuses 16 führt dieser Luftströmungsweg 28 entlang des gekrümmten Übergangsbereichs 22 zum Innenraum des Anbringungsabschnitts 24, wobei hierzu am Bodenbereich 20 des Gehäuses 16 ein in den Innenraum des Anbringungsabschnitts 24 eingreifender, zentrisch angeordneter Führungsvorsprung 34 vorgesehen ist.

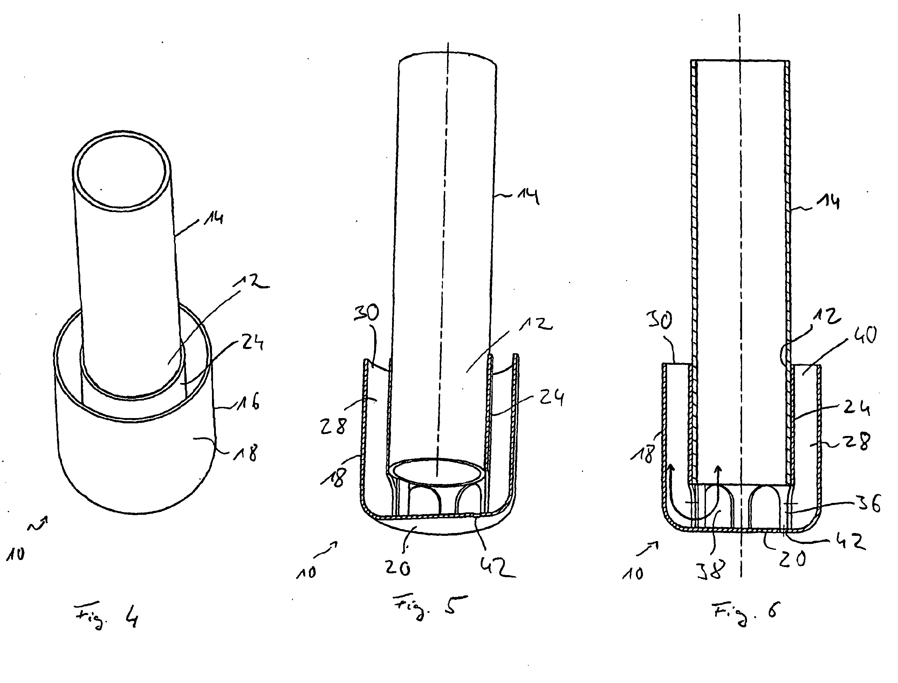

Der Innendurchmesser des hülsenartigen Anbringungsabschnitts 24 ist so ausgebildet, dass er auf die Außenabmessung der Luftleitung 14 in ihrem Endbereich 12 abgestimmt ist, so dass durch Aufschieben in dem in Fig. 3 dargestellten Zustand durch Klemmwirkung der Schalldämpfer 10 an der Luftleitung 14 fest arretiert ist. Hier können zusätzlich ggf. Schellen, Noppen o.dgl. eingesetzt werden, um den Anbringungsabschnitt 24 an der Luftleitung 14 fest zu arretieren. Ist der Endbereich 12 der Luftleitung 14 ein Austrittsbereich, so strömt also die aus diesem Endbereich 12 austretende Luft in Richtung auf den Bodenbereich 20 zu, wo sie zunächst an dem Luftführungsvorsprung 34, der in den Bodenbereich 20 ebenfalls gekrümmt übergeht, sachte umgelenkt wird, ebenso wie am Übergangsbereich 22 zur Umfangswandung 18. Somit kann vermieden werden, dass bei der Luftumlenkung selbst wesentliche Strömungsgeräusche erzeugt werden, wobei gleichwohl durch die Luftströmungsumlenkung und die dabei auch induzierte Schallreflexion bereits ein erster Dämpfungsaspekt auftritt. Die so umgelenkte Luft strömt dann entlang des wendelartig ausgestalteten Luftströmungswegs 28 zur Öffnung 32, wobei aufgrund der auch dabei auftretenden Umlenkung bzw. labyrinthartigen Führung eine wesentliche Schalldämpfung bei den in der Luft transportierten Geräuschen erzeugt wird.

Ist der Endbereich 12 ein Eintrittsbereich, so strömt die Luft in der entgegengesetzten Richtung, nämlich zunächst durch die Öffnung 32 und dann entlang des Luftströmungswegs 28 zum Bodenbereich 20, um dort umgelenkt und in den Endbereich 12 der Luftleitung 14 eingeleitet zu werden. Auch dabei wird aufgrund der mehrfachen Umleitung die Gefahr, dass im Innenvolumen der Luftleitung 14 transportierte Geräusche nach außen gelangen, elementar gemindert.

Eine abgewandelte Ausgestaltungsform des erfindungsgemäßen Schalldämpfers ist in den Fig. 4 - 6 gezeigt. Auch hier sind der Anbringungsabschnitt 24 und die Umfangswandung 18 des Schalldämpfergehäuses 16 zueinander im Wesentlichen konzentrisch angeordnet. Da jedoch hier keine wendelartige Strömungsführungswandung zwischen diesen beiden Elementen vorhanden ist, ist ein im Wesentlichen ringartiger Luftströmungsweg 28 gebildet. Der Anbringungsabschnitt 24 ist in seinem dem Bodenbereich 20 nahen Endbereich 36 mit dem Bodenbereich 20 verbunden, beispielsweise durch Verklebung, Verrastung oder Verschweißung. Ferner sind in diesem Endbereich 36 mehrere beispielsweise zum Ende hin offene Aussparungen oder Öffnungen 38 gebildet. Über diese Öffnungen 38 ist der Luftströmungsweg 28 in dem dem Bodenbereich 20 nahen Endabschnitt desselben zum Innenvolumen des Endbereichs 12 der Luftleitung 14 offen.

Auch bei dieser Ausgestaltungsvariante ist dafür gesorgt, dass die beispielsweise an dem Endbereich 12 der Luftleitung 14 ein- oder austretende Luft zumindest einmal umgelenkt wird, um dann über den vom Bodenbereich 20 entfernt liegenden Endbereich 30 bzw. die dort gebildete ringartige Öffnung 40 auszutreten oder dort einzutreten. Somit kann auch hier dafür gesorgt werden, dass durch die Kapselungswirkung die im Innenvolumenbereich der Luftleitung 14 transportierten Geräusche im Wesentlichen nicht nach außen gelangen bzw. erheblich gedämpft werden.

Bei der Ausgestaltungsform gemäß den Fig. 4 - 6 erkennt man weiter im Bodenbereich 20 eine Kondensataustrittsöffnung 42. Im Bereich dieser mit vergleichsweise kleiner Abmessung ausgebildeten Öffnung 42 kann Kondensat, das sich an der Innenoberfläche des Gehäuses 16 niederschlägt, ebenso wie Schmutz austreten, was insbesondere von Vorteil ist, wenn der Schalldämpfer 10 im Einbauzustand so positioniert ist, wie beispielsweise in den Fig. 5 und 6 gezeigt, also mit nach unten orientiertem Bodenbereich 20. Eine derartige Kondensataustrittsöffnung 42 kann selbstverständlich auch bei der Ausgestaltungsform gemäß den Fig. 1 - 3 vorgesehen sein. Es sei darauf hingewiesen, dass selbstverständlich auch bei der in den Fig. 4 - 6 gezeigten Ausgestaltungsform im Bodenbereich 20 der in den Fig. 2 und 3 erkennbare Luftführungsvorsprung 34 ausgebildet sein kann.

Aus Kostengründen und aus fertigungstechnischen Gründen ist der erfindungsgemäße Schalldämpfer vorzugsweise aus Kunststoffmaterial aufgebaut.

## Patentansprüche

1. Schalldämpfer für ein Fahrzeugtemperiergerät, umfassend einen hülsenartigen Anbringungsabschnitt (24) zur Anbringung des Schalldämpfers (10) an einer Leitung (14) sowie ein Schalldämpfergehäuse (16), welches einen zu einem Öffnungsbereich der Leitung (14) führenden Strömungsweg (28) begrenzt,
**dadurch gekennzeichnet, dass** im Bereich eines Gehäusebodens (20) des Schalldämpfergehäuses (16) ein in Richtung auf den Anbringungsabschnitt (24) zu sich erstreckender Strömungsführungsvorsprung (34) vorgesehen ist.

2. Schalldämpfer nach Anspruch 1,
**dadurch gekennzeichnet, dass** das Schalldämpfergehäuse (16) im Wesentlichen topfartig ausgebildet ist und den Anbringungsabschnitt (24) umgibt.

3. Schalldämpfer nach Anspruch 1 oder 2,
**dadurch gekennzeichnet, dass** das Schalldämpfergehäuse (16) den Strömungsweg (28) zusammen mit dem Anbringungsabschnitt (24) begrenzt.

4. Schalldämpfer nach Anspruch 3,
**dadurch gekennzeichnet, dass** zwischen dem Anbringungsabschnitt (24) und dem Schalldämpfergehäuse (16) ein wendelartiger Strömungsweg (28) begrenzt ist, der zur Leitung (14) im Bereich eines Gehäusebodens (20) des Schalldämpfergehäuses (16) offen ist und zur Umgebung in einem vom Gehäuseboden (20) entfernten Endbereich (30) des Schalldämpfergehäuses (16) offen ist.

5. Schalldämpfer nach Anspruch 4,
**dadurch gekennzeichnet, dass** zwischen dem Schalldämpfergehäuse (16) und dem Anbringungsabschnitt (24) eine sich wendelartig erstreckende Strömungsführungswandung (26) vorgesehen ist.

6. **Schalldämpfer nach Anspruch 3,**
**dadurch gekennzeichnet, dass** zwischen dem Schalldämpfergehäuse (16) und dem Anbringungsabschnitt (24) ein im Wesentlichen ringartiger Strömungsweg (28) gebildet ist, welcher zur Leitung (14) im Bereich eines Gehäusebodens (20) des Schalldämpfergehäuses (16) offen ist und zur Umgebung in einem von dem Gehäuseboden (20) entfernten Endbereich (30) des Schalldämpfergehäuses (16) offen ist.

7. Schalldämpfer nach Anspruch 6,
**dadurch gekennzeichnet, dass** in dem Anbringungsabschnitt (24) wenigstens eine Durchtrittsöffnung (38) vorgesehen ist, über welche der Strömungsweg (28) zur Leitung (14) offen ist.

8. Schalldämpfer nach einem der Ansprüche 1-7,
**dadurch gekennzeichnet, dass** der Strömungsführungsvorsprung (34) in den Anbringungsabschnitt (24) eingreift.

## Claims

1. A silencer for a temperature control system of a vehicle, comprising a sleeve-like mounting portion (24) for mounting the silencer (10) on a duct (14), as well as a silencer housing (16) which defines a flow path (28) leading to an opening zone of the duct (14),
**characterised in that** a flow-directing projection (34) extending towards the mounting portion (24) is provided in the vicinity of housing base (20) of the silencer housing (16).

2. A silencer according to Claim 1, **characterised in that** the silencer housing (16) is substantially pot-shaped and surrounds the mounting portion (24).

3. A silencer according to either Claim 1 or Claim 2, **characterised in that** the silencer housing (16) defines the flow path (28), together with the mounting portion (24).

4. A silencer according to Claim 3, **characterised in that** between the mounting portion (24) and the silencer housing (16) a helical flow path (28) is defined, which is open towards the duct (14) in the vicinity of a housing base (20) of the silencer housing (16) and is open to the environment in an end zone (30) of the silencer housing (16) remote from the housing base (20).

5. A silencer according to Claim 4, **characterised in that** a helically extending flow-directing wall (26) is provided between the silencer housing (16) and the mounting portion (24).

6. A silencer according to Claim 3, **characterised in that** between the silencer housing (16) and the mounting portion (24) a substantially annular flow path (28) is formed, which is open towards the duct (14) in the vicinity of a housing base (20) of the silencer housing (16) and is open to the environment in an end zone (30) of the silencer housing (16) remote from the housing base (20).

7. A silencer according to Claim 6, **characterised in that** in the mounting portion (24) at least one through-opening (38) is provided, through which the flow path (28) is open towards the duct (14).

8. A silencer according to any one of Claims 1 to 7, **characterised in that** the flow-directing projection (34) engages in the mounting portion (24).

## Revendications

1. Silencieux pour un dispositif de régulation de température dans un véhicule, comprenant un tronçon de fixation (24) en forme de manchon pour la fixation du silencieux (10) à une conduite (14), ainsi qu'une enveloppe de silencieux (16), qui limite une trajectoire d'écoulement (28), conduisant à une zone d'ouverture de la conduite (14),
**caractérisé en ce que** dans la zone d'un fond d'enveloppe (20) de l'enveloppe du silencieux (16), une saillie de guidage d'écoulement (34) est prévue, s'avançant dans la direction du tronçon de fixation (24).

2. Silencieux selon la revendication 1
**caractérisé en ce que** l'enveloppe du silencieux (16) est conçue sensiblement en forme de pot et entoure le tronçon de fixation (24).

3. Silencieux selon la revendication 1 ou 2
**caractérisé en ce que** l'enveloppe du silencieux (16) délimite la trajectoire d'écoulement (28) conjointement avec le tronçon de fixation (24).

4. Silencieux selon la revendication 3
**caractérisé en ce que** le tronçon de fixation (24) et l'enveloppe du silencieux (16) délimitent une trajectoire d'écoulement (28) hélicoïdale, qui s'ouvre sur la conduite (14) au niveau de la zone de fond d'enveloppe (20) de l'enveloppe du silencieux (16) et qui s'ouvre sur le milieu ambiant au niveau d'une zone d'extrémité (30) de l'enveloppe du silencieux (16), éloignée du fond d'enveloppe (20).

5. Silencieux selon la revendication 4
**caractérisé en ce qu'**une cloison de guidage d'écoulement (26), évoluant de manière hélicoïdale, est prévue entre l'enveloppe du silencieux (16) et le tronçon de fixation (24).

6. Silencieux selon la revendication 3
**caractérisé en ce qu'**entre l'enveloppe du silencieux (16) et le tronçon de fixation (24) est formée une trajectoire d'écoulement (28) sensiblement annulaire, qui s'ouvre vers la conduite (14) au niveau de la zone d'un fond d'enveloppe (20) de l'enveloppe du silencieux (16) et qui s'ouvre sur le milieu ambiant au niveau d'une zone d'extrémité (30) éloignée du fond d'enveloppe (20).

7. Silencieux selon la revendication 6
**caractérisé en ce qu'**au moins une ouverture de passage (38) est prévue dans le tronçon de fixation (24), au moyen de laquelle la trajectoire d'écoulement (28) est ouverte sur la conduite (14).

8. Silencieux selon une des revendications 1 à 7
**caractérisé en ce que** la saillie de guidage d'écoulement (34) pénètre dans le tronçon de fixation (24).
